# EUROPEAN PATENT SPECIFICATION

(11) **EP 0 701 516 B1**
(45) Date of publication and mention of the grant of the patent: **03.03.1999**
(21) Application number: 95914466.8
(22) Date of filing: 07.04.1995
(51) Int. Cl.: B60R 22/46

(54) **PRETENSIONER FOR SEAT BELT RETRACTOR**
STRAMMVORRICHTUNG FÜR EINEN SICHERHEITSGURTAUFROLLER
PRETENSIONNEUR POUR ENROULEUR DE CEINTURE DE SECURITE

(30) Priority: 07.04.1994 GB 9406864
(43) Date of publication of application: 20.03.1996
(73) Proprietor: BREED AUTOMOTIVE TECHNOLOGY, INC., Lakeland, County of Polk, Florida (US)
(72) Inventor: AISTON, Brian, Carlisle, Cumbria CAS2 5HX (GB); Blackadder, David, Carlisle, Cumbria (GB)
(74) Representative: Weyland, J.J. Pierre
(86) International application number: GB9500807
(87) International publication number: WO9527637

(56) References cited:
- EP-A- 0 059 643
- EP-A- 0 582 096
- EP-A- 0 629 531
- DE-A- 3 040 667
- DE-A- 3 220 498
- PATENT ABSTRACTS OF JAPAN vol. 13, no. 183 (M-820) (3531) 28 April 1989 & JP,A,01 012 953 (HONDA MOTOR CO LTD) 17 January 1989

## Description

The present invention relates to a pretensioner for a seat belt retractor.

Pretensioners wind in belt slack in the event of a vehicle crash so as to restrain a passenger more securely reducing belt injuries and to ensure that the passenger is optimally oriented in a seat when a gas bag is inflated (when fitted).

Known methods of pretensioning include using a piston, driven either by a spring or by pyrotechnic means, to pull a cable wound round the belt retractor reel in the event of a crash. Large forces are needed due to the inertia of the retractor and because it is necessary to effect the pretensioning in the first milliseconds of a crash situation i.e. before the belt is tensioned by the passenger's forward movement in the crash. These known systems are heavy and bulky. The piston/cylinder arrangement may be close-coupled to the retractor but problems are encountered in fitting such a retractor system in the limited space available between a seat and the side of a car. On the other hand if the piston/cylinder arrangement is located remote from the reel so that it can be fitted in a convenient space in a car, e.g. to the chassis under a seat, then an unwieldly length of cable is required, adding to expense in production and decreasing efficiency.

In addition, known systems require complex and costly clutch arrangements to engage effectively with the retractor reel within the required time scale.

A more compact form of pretensioner is disclosed in DE-U-93 08 273.8 which comprises one or more linearly movable pistons, driven by gas generators along respective predetermined paths and having toothed surfaces to engage and drive a rotatable reel shaft in the event of a crash.

It is an object of the present invention to provide a more compact and lightweight pretensioner reel retractor which can be easily fitted in a vehicle.

According to the invention there is provided a pretensioner arrangement for a vehicle safety restraint retractor for winding a seat belt retractor reel in a belt rewinding direction in the event of a crash, the pretensioner comprising:
at least one linearly movable positive displacement member (2);
driving means (7) for moving the member (2) along a predetermined path, the member (2) having a surface portion (6) adapted to engage a corresponding peripheral surface on a rotatable part (1) so as to transfer the linear momentum of the member (2) to rotary momentum of the rotatable part (1); characterised by
means for coupling the rotatable part (1) of the belt reel on the occurrence of a crash so that the pretensioner winds the reel in a belt rewinding direction, and
   wherein the rotatable part (1) has at least one radially extending arm (19) and the displacement member (2) has an abutment surface (18) arranged to engage the arm(19) during the pretensioning operation so as to drive the rotatable part (1).

In normal operation, i.e. normal unwinding and inertial rewinding of the retractor reel, the linear displacement shaft engaging member is spaced from the shaft. However means actuable in a crash situation are provided to bias the member into engagement with the shaft. Such means may take the form of a spring or alternatively a solenoid, or a gas cushion which may itself be generated by the gas generator used to move the or each engaging member.

According to a preferred embodiment of the present invention there are two shaft engaging members mounted so that in a crash situation they are driven longitudinally in parallel opposite directions so as to reinforceably cooperate in rotating the reel shaft and thus rewind the reel.

The two shaft engaging members may be driven by a common gas generator or by separate gas generators or alternatively the exhaust gases from the first driven member may be used to drive the second member.

Preferably, a substantial part of the retractor reel, for example the spool and the supports, is formed of a plastics material or other light yet generally strong material so as to reduce the inertia of the reel and reduce the force needed to rewind it. This inertial reduction is further enhanced if the shaft of the reel is small, e.g. less than 8mm diameter.

The shaft engaging members may be located in a plastic cartridge which can be easily fitted to a reel in a vehicle by sliding it over the shaft extension.

For a better understanding of the present invention, and to show how the same may be carried into effect, reference will now be made, by way of example, to the accompanying drawings in which:
Fig. 1 is a cross-sectional view of a pretensioner according to the prior art.
Fig. 2 shows a cartridge containing a pretensioner according to Fig. 1.
Fig. 3 is a cross-sectional side view of an embodiment of the invention;
Figs. 3A are views in the direction of arrow A of Fig. 3 illustrating the engagement of the piston with the clutch;
Figs. 3B are front views of Fig. 3 in the direction of arrow B;
Figs. 4a-c are sequence diagrams illustrating the operation of the pretensioner of Fig. 3; and
Fig. 5 is a side view of an alternative piston shape.

The extension of a retractor reel shaft is shown at 1, and two co-operating shaft engaging rods 2 are biased against the shaft extension 1 by springs 3 in a pretensioning situation as shown in the Figure. The shaft engaging rods are located in cylinders 4 which guide them for movement in longitudinal directions as indicated by arrows 5. The engaging rods 2 have roughened planar surfaces 6 on the sides which (in use) abut the shaft extension. They are driven by gas generators 7 detonated electrically via wiring 8 connected to a vehicle sensor for detecting a crash situation and generating an electrical signal in response thereto.

About 100mg of explosive may be sufficient to drive the-rods 2 enough to rotate the shaft 1 to rewind the reel the required amount (i.e. to rewind the belt webbing by at least 28cm) provided the reel spool and supports are made of plastic material. Hitherto quantities of 400-1400mg explosive have been needed in traditional piston cylinder pretensioning systems. The shaft extension typically has a diameter of 8mm and rotation of the spool can be effected within 10ms.

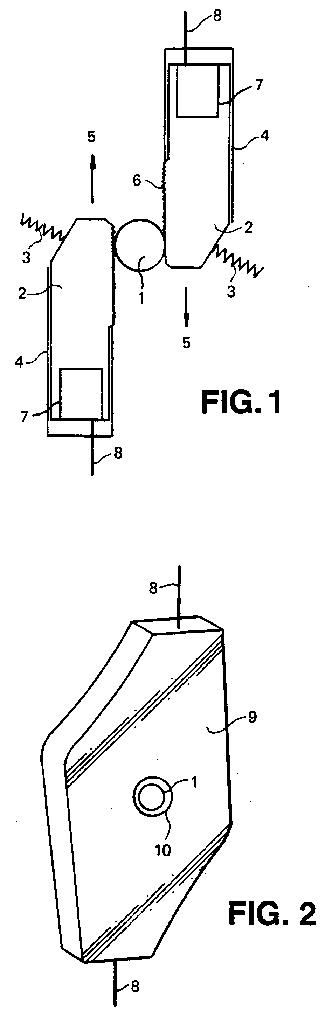

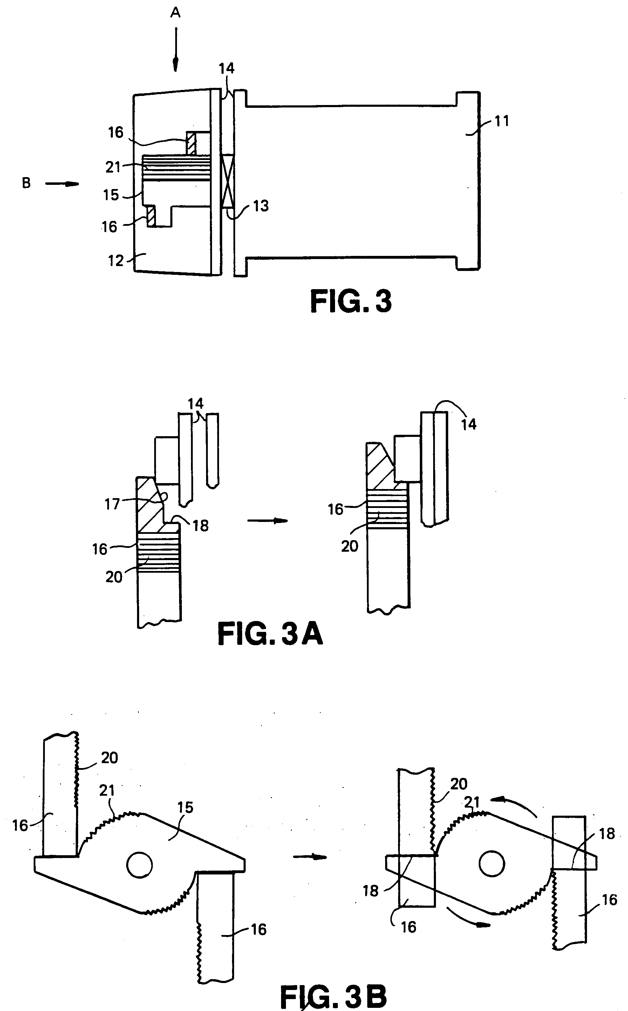

Fig. 2 shows an outer plastic casing 9 surrounding the pretensioner of Fig. 1 which is made of plastic and fitted over the shaft extension 1 through hole 10. Wires 8, connected to respective gas generators protrude from the cartridge casing 9 for connection to a vehicle crash sensor which may be of any one of several well known constructions.

It will be seen that a cassette of the form shown in Fig. 2 is easily fitted to a retractor in a vehicle.

After the pretensioning operation is effected, a web clamp prevents the belt from unwinding from the reel in response to the force of a passenger against the belt as the vehicle decelerates in a crash situation. Such a web clamp is known and serves to lock clamping wedge shaped jaws against the belt webbing to prevent unwinding and keep the passenger safely and firmly located upright in the seat.

In Fig. 3 a retractor webbing spool 11 has a compact pretensioner 12 attached at one side and is separated therefrom in normal retractor use by the action of a spring 13. The spring 13 urges apart two plates of a friction or teeth clutch, indicated generally at 14.

The pretensioner 12 comprises a central knurled or toothed spindle 15 mounted to pretensioner clutch plate 14, and two pistons 16 mounted on either side of and in close proximity to the spindle 15.

In the event of a crash situation, as detected by a vehicle sensor, the pretensioner 12 is activated to rewind loose webbing onto the spool. This is done by engaging the clutch 14 and driving pistons 16 in opposite directions to rotate the spindle 15 and consequentially the spool 11 in a webbing rewind direction.

The engagement of the clutch 14 is illustrated in Figs. 3A which are views in the direction of arrow A. The tip of each piston 16 has a lateral cut out portion providing a ramp surface 17 and an abutment surface 18. The left hand drawing in Fig. 3A shows the position with the piston stationary and the clutch open. As the piston begins to move (as in the right hand drawing) the clutch is urged into a closed position. The roughened, knurled, splined or toothed areas 20 of the pistons then begin to engage similar surfaces 21 on the pretensioner spindle 15 and cause the spindle and through the clutch, the spool, to rotate.

Figs. 3A and 3B similarly show stationary pistons and disengaged clutch position to the left, and moving pistons with the clutch closed and the pistons beginning to push the start of rotation, to the right.

Fig. 3B illustrates a further advantageous embodiment of the invention wherein the pretensioner spindle 15 has radially extending arms 19 which provide for an initial positive engagement for the pistons with the spindle and give the motion a push or kick start.

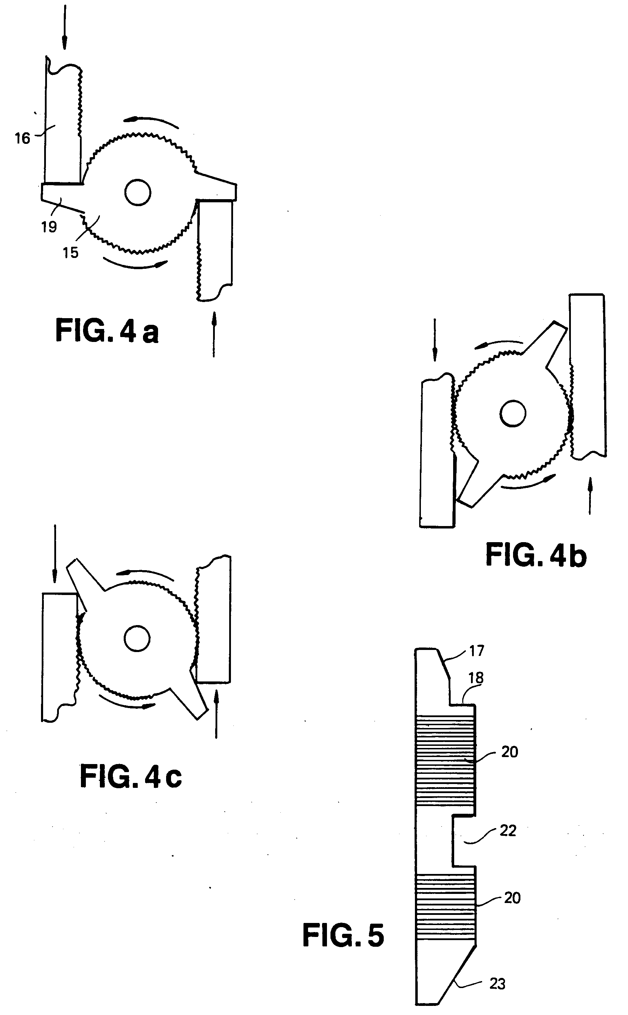

This is illustrated more clearly in the sequence diagram of Figs. 4a, b, c. Fig. 4a shows the abutment surface 18 of each piston engaging the arms 19 and pushing the spindle 15 in an anti-clockwise direction. Subsequently (as in Fig. 4b) the pistons engage the friction surfaces 21 and frictionally rotate the spindle further. Fig. 4c shows the completion of the piston stroke.

Fig. 5 shows an alternative shaped piston which provides for a double kick start since a second slot 22 is positioned along its length to engage the second radial arm to provide a second positive engagement and push during the piston stroke. Of course more than two arms may be provided for the spindle and the position of the second piston slot 22 would be adjusted accordingly.

A trailing ramp edge 23 is shown on this piston to provide for controlled clutch release at the end of the stroke. of course, the position of this surface has to be carefully adjusted.

The pistons are preferably gas driven either by including integral gas generators which move with the pistons or by using the propulsion force of a stationary gas generator to push the piston. The gas generator may be arranged to cause a gas cushion to develop on the outer axial side of the piston to urge the piston into engagement with the spindle.

Gas generators may be arranged to burn simultaneously or in sequence to propel the pistons together or one after the other.

## Claims

1. A pretensioner arrangement for a vehicle safety restraint retractor for winding a seat belt retractor reel (11) in a belt rewinding direction in the event of a crash, the pretensioner comprising:
at least one linearly movable positive displacement member (16);
driving means (7) for moving the member (16) along a predetermined path, the member (16) having a surface portion (20) adapted to engage a corresponding peripheral surface (21) on a rotatable part (15) so as to transfer the linear momentum of the member (16) to rotary momentum of the rotatable part (15) (1); characterised by
means (14, 20, 21) for coupling the rotatable part (15) of the belt reel on the occurrence of a crash so that the pretensioner winds the reel (11) in a belt rewinding direction, and
wherein the rotatable part (15) has at least one radially extending arm (19) and the displacement member (16) has an abutment surface (18) arranged to engage the arm(19) during the pretensioning operation so as to drive the rotatable part (15).

2. A pretensioner according to claim 1, wherein the reel (11) is mounted on a shaft and an axial shaft extension is arranged to abut the linear displacement member (16) in a crash situation so that the member (16) directly drives the reel by co-operation of the engagement surfaces (18).

3. A pretensioner according to claim 1, wherein the coupling means comprises a clutch (14) and movement of the displacement member (16) in response to a crash situation is arranged to engage the clutch (14).

4. A pretensioner according to claim 3, wherein the displacement member (16) is shaped with a leading end having a ramp surface (17) which engages a clutch control member to bring the clutch into engagement as the displacement member (16) moves in a pretensioning operation.

5. A pretensioner according to claim 3 or 4, wherein the displacement member (16) has a tapering cam surface (23) at its trailing end for effecting controlled disengagement of the clutch.

6. A pretensioner according to any preceding claim comprising means (4) for guiding the linearly displaceable member (16) in a direction tangential to the rotatable part (15).

7. A pretensioner according to any preceding claim comprising two linearly displaceable members (16) for rotating the rotatable part (15) and arranged to be driven in opposing tangential directions relative to the rotatable part (15).

8. A pretensioner according to any preceding claim, wherein the driving means comprises a gas generator (7) arranged to linearly drive the displacement member (16).

9. A pretensioner according to claim 8, wherein the gas generator (7) is mounted to move with the displacement member (16).

10. A pretensioner according to claim 7, wherein the driving means comprises two gas generators (7) arranged for driving respective displacement members (16).

11. A pretensioner according to claim 7 wherein the driving means comprises one gas generator (7) arranged to drive both displacement members (16) simultaneously.

12. A pretensioner according to claim 10 comprising synchronising control means for controlling the firing of the two gas generators (7) in sequence.

13. A pretensioner according to claim 7 comprising means for connecting the two displacement members (16) so that exhaust gases from firing the gas generator (7) for driving the first member (16) act on the second member (16) to impart driving force thereto.

14. A pretensioner according to any one of claims 8 to 13 comprising pyrotechnic firing means for the or each gas generator (7).

15. A pretensioner according to any preceding claim, wherein the engagement surfaces (20, 21) co-operate by friction to transfer movement of the rotatable part (15).

16. A pretensioner according to claim 15, wherein the engagement surfaces (20, 21) are knurled.

17. A pretensioner according to claim 15, wherein the engagement surfaces (20, 21) are roughened.

18. A pretensioner according to claim 15, wherein the engagement surfaces (20, 21) are splined.

19. A pretensioner according to any preceding claim, wherein the engagement surfaces (20, 21) are toothed to provide a positive engagement.

20. A pretensioner according to claim 19, wherein the displacement member (16) has two such abutment surfaces (18, 22) for engaging different or the same arms of the rotatable part (15).

21. A pretensioner according to any preceding claim comprising means (3) for biasing the or each displacement member (16) towards and into engagement with the rotatable part (15) in response to a crash situation.

22. A pretensioner according to claim 21, wherein the biasing means comprises a spring (3) located at the leading tip of the displacement member (16).

23. A pretensioner according to claim 21, wherein the biasing means (3) comprises a solenoid actuable on a crash being detected.

24. A pretensioner according to claim 21, wherein the biasing means comprises a gas cushion generated in response to a crash being detected.

25. A pretensioner according to any preceding claim which is removably connected to a retractor.

26. A pretensioner according to any one of the preceding claims in combination with a web clamping device located at the webbing payout side of the retractor.

27. A pretensioner according to any one of the preceding claims when fitted to a retractor with a reel made substantially of plastics material.

## Patentansprüche

1. Vorspanneranordnung für einen Fahrzeug-Sicherheits-Rückhalte-Aufroller zum Wickeln einer Sicherheitsgurt-Aufrollerspule (11) in der Gürtelaufwickelrichtung im Falle eines Zusammenpralls, wobei der Vorspanner aufweist:
mindestens ein linear verschiebbares, positives Verschiebungselement (16);
Antriebsmittel (7), um das Element (16) längs eines vorgegebenen Weges zu verschieben, wobei das Element (16) einen Oberflächenbereich (20) hat, der ausgelegt ist, um in eine entsprechende Umfangsfläche (21) auf einem drehbaren Teil (15) so einzugreifen, daß das lineare Moment des Elements (16) auf das Drehmoment des drehbaren Teils (15) übertragen wird; gekennzeichnet durch
Mittel (14, 20, 21) zum Ankuppeln des drehbaren Teils (15) der Gurtspule beim Auftreten eines Zusammenpralls, so daß der Vorspanner die Spule (11) in der Gurtaufwickelrichtung wickelt, und
wobei das drehbare Teil (15) mindestens einen sich radial erstreckenden Arm (19) hat, und das Verschiebungselement (16) eine Anschlagfläche (18) hat, die ausgelegt ist, um während des Vorspannvorgangs in den Arm (19) so einzugreifen, daß das drehbare Teil (15) angetrieben wird.

2. Vorspanner gemäß Anspruch 1, wobei die Spule (11) auf einer Welle angebracht ist, und eine axiale Wellenverlängerung ausgelegt ist, um in einer Zusammenprallsituation gegen das lineare Verschiebungselement (16) zu stoßen, so daß das Element (16) durch Zusammenwirken mit der Eingriffsfläche (18) die Spule direkt antreibt.

3. Vorspanner gemäß Anspruch 1, wobei die Kupplungsmittel eine Kupplung (14) aufweisen, und die Verschiebung des Verschiebungselements (16) als Reaktion auf eine Zusammenprallsituation ausgelegt ist, um die Kupplung (14) einzurücken.

4. Vorspanner gemäß Anspruch 3, wobei das Verschiebungselement (16) ein vorderes Ende hat, das eine Rampenfläche (17) hat, die in ein Kupplungssteuerelement eingreift, um die Kupplung einzurücken, wenn das Verschiebungselement (16) bei einem Vorspannvorgang verschoben wird.

5. Vorspanner gemäß Anspruch 3 oder 4, wobei das Verschiebungselement (16) an seinem hinteren Ende eine konisch zulaufende Nockenfläche (23) hat, um eine gesteuerte Ausrückung der Kupplung auszuführen.

6. Vorspanner gemäß irgendeinem vorhergehenden Anspruch, wobei der Vorspanner Mittel (4) aufweist, um das linear verschiebbare Element (16) in einer zu dem drehbaren Teil (15) tangentialen Richtung zu führen.

7. Vorspanner gemäß irgendeinem vorhergehenden Anspruch, wobei der Vorspanner zwei linear verschiebbare Elemente (16) aufweist, um das drehbare Teil (15) zu drehen, und diese Elemente ausgelegt sind, um in entgegengesetzten tangentialen Richtungen relativ zu dem drehbaren Teil (15) angetrieben zu werden.

8. Vorspanner gemäß irgendeinem vorhergehenden Anspruch, wobei die Antriebsmittel einen Gasgenerator (7) aufweisen, der ausgelegt ist, um das Verschiebungselement (16) linear anzutreiben.

9. Vorspanner gemäß Anspruch 8, wobei der Gasgenerator (7) so angebracht ist, daß er mit dem Verschiebungselement (16) verschoben wird.

10. Vorspanner gemäß Anspruch 7, wobei die Antriebsmittel zwei Gasgeneratoren (7) aufweisen, die ausgelegt sind, um die jeweiligen Verschiebungselemente (16) anzutreiben.

11. Vorspanner gemäß Anspruch 7, wobei die Antriebsmittel einen Gasgenerator (7) aufweisen, der ausgelegt ist, um beide Verschiebungselemente (16) gleichzeitig anzutreiben.

12. Vorspanner gemäß Anspruch 10, wobei der Vorspanner synchronisierende Steuermittel aufweist, um die aufeinanderfolgende Betätigung der zwei Gasgeneratoren (7) zu steuern.

13. Vorspanner gemäß Anspruch 7, wobei der Vorspanner Mittel aufweist, um die zwei Verschiebungselemente (16) so zu verbinden, daß die Auspuffgase bei der Betätigung des Gasgenerators (7) zum Antreiben des ersten Elements (16) auf das zweite Element (16) wirken, um eine Antriebskraft darauf zu übertragen.

14. Vorspanner gemäß irgendeinem der Ansprüche 8 bis 13, wobei der Vorspanner pyrotechnische Betätigungsmittel für den oder jeden Gasgenerator (7) aufweist.

15. Vorspanner gemäß irgendeinem vorhergehenden Anspruch, wobei die Eingriffsflächen (20, 21) infolge Reibung zusammenwirken, um die Bewegung des drehbaren Teils (15) zu übertragen.

16. Vorspanner gemäß Anspruch 15, wobei die Eingriffsflächen (20, 21) gerändelt sind.

17. Vorspanner gemäß Anspruch 15, wobei die Eingriffsflächen (20, 21) aufgerauht sind.

18. Vorspanner gemäß Anspruch 15, wobei die Eingriffsflächen (20, 21) kerbverzahnt sind.

19. Vorspanner gemäß irgendeinem vorhergehenden Anspruch, wobei die Eingriffsflächen (20, 21) gezahnt sind, um einen positiven Eingriff zu erhalten.

20. Vorspanner gemäß Anspruch 19, wobei das Verschiebungselement (16) zwei solche Anschlagflächen (18, 22) hat, um in verschiedene oder die gleichen Arme des drehbaren Teils (15) einzugreifen.

21. Vorspanner gemäß irgendeinem vorhergehenden Anspruch, wobei der Vorspanner Mittel (3) aufweist, um als Reaktion auf eine Zusammenprallsituation das oder jedes Verschiebungselement (16) zu dem drehbaren Teil (15) hin und bis zum Eingriff mit dem drehbaren Teil (15) vorzuspannen.

22. Vorspanner gemäß Anspruch 21, wobei die Vorspannmittel (3) eine Feder aufweisen, die bei der vorderen Spitze des Verschiebungselements (16) gelegen ist.

23. Vorspanner gemäß Anspruch 21, wobei die Vorspannmittel (3) ein Magnetventil aufweisen, das bei einem erfaßten Zusammenprall betätigbar ist.

24. Vorspanner gemäß Anspruch 21, wobei die Vorspannmittel ein Gaskissen aufweisen, das als Reaktion auf einen erfaßten Zusammenprall erzeugt wird.

25. Vorspanner gemäß irgendeinem vorhergehenden Anspruch, wobei der Vorspanner mit einem Aufroller abnehmbar verbunden ist.

26. Vorspanner gemäß irgendeinem der vorhergehenden Ansprüche, in Verbindung mit einer auf der Gurtauslaufseite des Aufrollers gelegenen Gurtband-Klemmvorrichtung.

27. Vorspanner gemäß irgendeinem der vorhergehenden Ansprüche, wenn der Vorspanner bei einem Aufroller mit einer im wesentlichen aus Kunststoff bestehenden Spule angebracht ist.

## Revendications

1. Dispositif prétensionneur pour un enrouleur de ceinture de sécurité d'un véhicule, destiné à enrouler une bobine d'enrouleur de la ceinture de sécurité (11) dans une direction de réenroulement de la ceinture en cas d'une collision, le prétensionneur comprenant:
au moins un élément de déplacement positif pouvant se déplacer linéairement (16);
un moyen d'entraînement (7) pour déplacer l'élément (16) le long d'une voie prédéterminée, l'élément (16) comportant une partie de surface (20), destinée à s'engager dans une surface périphérique correspondante (21) sur une partie rotative (15), de sorte à transférer l'impulsion linéaire de l'élément (16) à l'impulsion rotative de la partie rotative (15); caractérisé par
un moyen (14, 20, 21) pour coupler la partie rotative (15) de la bobine de la ceinture lors d'une collision de sorte que le prétensionneur enroule la bobine (11) dans une direction de réenroulement de la ceinture, et
la partie rotative (15) comportant au moins un bras à extension radiale (19), l'élément de déplacement (16) comportant une surface de butée (18), agencée de sorte à s'engager dans le bras (19) au cours de l'opération de prétension, de sorte à entraîner la partie rotative (15).

2. Prétensionneur selon la revendication 1, dans lequel la bobine (11) est montée sur un arbre, une extension d'arbre axiale étant agencée de sorte à buter contre l'élément de déplacement linéaire (16) lors d'une collision, de sorte que l'élément (16) entraîne directement la bobine par coopération des surfaces d'engagement (18).

3. Prétensionneur selon la revendication 1, dans lequel le moyen de couplage comprend un embrayage (14), le déplacement de l'élément de déplacement (16) en réponse à une collision étant tel à entraîner un engagement de l'embrayage (14).

4. Prétensionneur selon la revendication 3, dans lequel l'élément de déplacement (16) comporte une extrémité d'attaque ayant une surface de rampe (17), s'engageant dans un élément de commande de l'embrayage pour engager l'embrayage lors du déplacement de l'élément de déplacement (16) au cours d'une opération de prétension.

5. Prétensionneur selon les revendications 3 ou 4, dans lequel l'élément de déplacement (16) comporte une surface à cames effilée (23) au niveau de son extrémité arrière pour entraîner un débrayage commandé.

6. Prétensionneur selon l'une quelconque des revendications précédentes, comprenant un moyen (4) pour guider l'élément à déplacement linéaire (16) dans une direction tangentielle à la partie rotative (15).

7. Prétensionneur selon l'une quelconque des revendications précédentes, comprenant deux éléments à déplacement linéaire (16) pour faire tourner la partie rotative (15), et agencés de sorte à être entraînés dans des directions tangentielles opposées par rapport à la partie rotative (15).

8. Prétensionneur selon l'une quelconque des revendications précédentes, dans lequel l'élément d'entraînement comprend un générateur de gaz (7) agencé de sorte à entraîner linéairement l'élément de déplacement (16).

9. Prétensionneur selon la revendication 8, dans lequel le générateur de gaz (7) est monté de sorte à se déplacer avec l'élément de déplacement (16).

10. Prétensionneur selon la revendication 7, dans lequel le moyen d'entraînement comprend deux générateurs de gaz (7), agencés de sorte à entraîner les éléments de déplacement respectifs (16).

11. Prétensionneur selon la revendication 7, dans lequel le moyen d'entraînement comprend un générateur de gaz (7), agencé de sorte à entraîner simultanément les deux éléments de déplacement (16).

12. Prétensionneur selon la revendication 10, comprenant un moyen de commande à synchronisation pour assurer la commande de l'allumage des deux générateurs de gaz (7) en séquence.

13. Prétensionneur selon la revendication 7, comprenant un moyen pour connecter les deux éléments de déplacement (16), de sorte que les gaz d'échappement de l'allumage du générateur de gaz (7) destinés à entraîner le premier élément (16) agissent sur le deuxième élément (16) pour lui conférer une force d'entraînement.

14. Prétensionneur selon l'une quelconque des revendications 8 à 13, comprenant un moyen d'allumage pyrotechnique pour le ou chaque générateur de gaz (7).

15. Prétensionneur selon l'une quelconque des revendications précédentes, dans lequel les surfaces d'engagement (20, 21) coopèrent par friction pour transférer le mouvement de la partie rotative (15).

16. Prétensionneur selon la revendication 15, dans lequel les surfaces d'engagement (20, 21) sont moletées.

17. Prétensionneur selon la revendication 15, dans lequel les surfaces d'engagement (20, 21) sont rugueuses.

18. Prétensionneur selon la revendication 15, dans lequel les surfaces d'engagement (20, 21) sont cannelées.

19. Prétensionneur selon l'une quelconque des revendications précédentes, dans lequel les surfaces d'engagement (20, 21) sont dentées pour assurer un engagement positif.

20. Prétensionneur selon la revendication 19, dans lequel l'élément de déplacement (16) comporte deux surfaces de butée de ce type (18, 21), destinées à s'engager dans des bras différents ou dans les mêmes bras de la partie rotative (15).

21. Prétensionneur selon l'une quelconque des revendications précédentes, comprenant un moyen (3) pour pousser le ou chaque élément de déplacement (16) en direction de la partie rotative (15) et l'engager dans celle-ci en réponse à une collision.

22. Prétensionneur selon la revendication 21, dans lequel le moyen de poussée (3) comprend un ressort, agencé au niveau de l'extrémité d'attaque de l'élément de déplacement (16).

23. Prétensionneur selon la revendication 21, dans lequel le moyen de poussée (3) comprend un solénoïde pouvant être actionné lors de la détection d'une collision.

24. Prétensionneur selon la revendication 21, dans lequel le moyen de poussée comprend un coussin à gaz déployé en réponse à la détection d'une collision.

25. Prétensionneur selon l'une quelconque des revendications précédentes, connecté de façon amovible à un enrouleur.

26. Prétensionneur selon l'une quelconque des revendications précédentes, en combinaison avec un dispositif d'attache de la bande agencé au niveau du côté de dévidement de la bande de l'enrouleur.

27. Prétensionneur selon l'une quelconque des revendications précédentes, adapté sur un enrouleur comportant une bobine composée normalement d'un matériau plastique.
